# FASCICULE DE BREVET EUROPEEN

(11) **EP 2 490 852 B1**
(45) Date de publication et mention de la délivrance du brevet: **24.06.2015**
(21) Numéro de dépôt: 10766052.4
(22) Date de dépôt: 18.10.2010
(51) Int. Cl.: B23K 9/32, B23K 9/12

(54) **DISPOSITIF DE CHANGEMENT D'ELECTRODE A SECURITE AMELIOREE**
VORRICHTUNG ZUM ELEKTRODENWECHSEL MIT ERHÖHTER SICHERHEIT
DEVICE FOR EXCHANGING ELECTRODES WITH IMPROVED SAFETY

(30) Priorité: 20.10.2009 FR 0957348
(43) Date de publication de la demande: 29.08.2012
(73) Titulaire: Areva NC, 75009 Paris (FR)
(72) Inventeur: ALLARD, Jean-Luc, F-30430 Mejanne le Clap (FR); SCHWANCK, Jean-Pierre, F-26190 Saint Paul Trois Châteaux (FR)
(74) Mandataire: Ilgart, Jean-Christophe
(86) Numéro de dépôt international: PCT/EP2010/065599
(87) Numéro de publication internationale: WO 2011/048037

(56) Documents cités:
- JP-A- 2001 108 786

## Description

La présente invention se rapporte à un dispositif de changement d'électrode, plus particulièrement à un dispositif de mise en place et de retrait d'une électrode sur un dispositif destiné à la fabrication de crayon de combustible nucléaire.

Les crayons de combustible comportent une gaine dans laquelle sont disposées des pastilles de combustible nucléaire et un bouchon pour fermer la gaine.

Le bouchon est ensuite soudé sur toute sa périphérie par un premier dispositif de soudage.

Le bouchon comporte un alésage par lequel le crayon est rempli d'un gaz. Cet alésage est ensuite obturé par un autre dispositif de soudage, appelé dispositif de queusotage.

Chacun de ces dispositifs de soudage comporte une électrode pour effectuer le soudage.

Cette électrode s'use et doit être remplacée.

Ce remplacement est effectué manuellement par un opérateur.

L'électrode est montée dans un outil porte-électrode par une extrémité, l'autre extrémité servant au soudage.

L'opérateur, pour remplacer l'électrode, pince avec ses doigts l'extrémité libre de l'électrodes et tire dessus pour la retirer du porte-électrode.

Pour la mise en place d'une nouvelle électrode, il saisit l'électrode par son extrémité de soudage et place l'autre extrémité dans le porte-électrode.

Par ailleurs, ces dispositifs sont montés dans des boîtes à gant, isolant les crayons de l'opérateur.

L''opérateur ne peut intervenir sur les dispositifs de soudage que par l'intermédiaire de gants fixés sur une paroi de la boîte à gant.

Ces interventions sont donc laborieuses.

En outre, il faut veiller à l'intégrité du confinement, et, de ce fait, éviter toute déchirure des gants.

Or, l'extrémité des électrodes destinées au soudage est extrêmement pointue. Par conséquent, l'opérateur peut déchirer ses gants lors du changement d'électrode.

Or, nous rappelons que l'intérieur des boîtes à gant peut être contaminante, une telle déchirure pourrait alors contaminer l'opérateur et l'environnement extérieur.

C'est par conséquent un but de la présente invention d'offrir un dispositif pour changer les électrodes offrant une grande sécurité pour l'opérateur, plus particulièrement protégeant des risques de déchirure par l'électrode.

### EXPOSÉ DE L'INVENTION

Le but énoncé ci-dessus est atteint par un dispositif de changement d'électrode comportant une partie fixe pour supporter le porte-électrode du dispositif de soudage et une partie mobile recouvrant l'extrémité du porte-électrode portant l'électrode, la partie mobile étant apte à saisir l'électrode par son extrémité affûtée pour la retirer du porte-électrode et à mettre une autre électrode à la place, tout en protégeant l'opérateur de toute déchirure due à l'électrode.

En d'autres termes, on prévoit un outil de préhension pour les électrodes, cet outil recouvrant l'extrémité affûtée de l'électrode usagée et celle de l'électrode neuve, afin d'isoler l'opérateur de ces extrémités.

La présente invention a alors principalement pour objet un dispositif de retrait d'une électrode d'un mandrin d'un outil porte-électrode et/ou de montage d'une électrode dans un mandrin d'un outil porte-électrode, ledit outil porte-électrode faisant partie d'un dispositif de soudage, ledit outil porte-électrode étant retiré du dispositif de soudage avant le retrait de l'électrode ou le montage de l'électrode, ledit dispositif des retrait/montage d'une électrode comportant une première partie destinée à loger ledit outil porte-électrode, ladite électrode faisant saillie au moins en partie à l'extérieur de ladite première partie, ladite première partie comportant des moyens pour immobiliser en translation et en rotation l'outil porte-électrode et une deuxième partie montée autour de la première partie destinée à recouvrir la partie de l'électrode faisant saillie à l'extérieur de la première partie, la deuxième partie étant séparable de la première partie par translation le long de l'électrode et étant mobile en rotation par rapport à la première partie lorsqu'elle l'entoure, la deuxième partie comportant des moyens pour serrer ou desserrer le mandrin de l'outil porte-électrode et des moyens pour rendre solidaire l'électrode de la partie mobile pour permettre son retrait du mandrin lors de la séparation de la première et de la deuxième partie, ou l'amenée de l'électrode lors de l'assemblage de la première et de la deuxième partie.

Les moyens pour immobiliser en translation et en rotation l'outil porte-électrode sont, par exemple formés par un taraudage coopérant avec un filetage réalisé sur l'outil porte-électrode.
La première partie peut comporter un corps tubulaire formant un support d'outil et la deuxième partie peut comporter un capot tubulaire entourant le support d'outil et apte à pivoter autour de celui-ci, et dans lequel les moyens pour serrer ou desserrer le mandrin comportent une empreinte de forme correspondante à celle de l'élément de serrage et de desserrage du mandrin. Par exemple, les moyens pour rendre solidaire l'électrode de la deuxième partie sont des moyens formant pince d'une extrémité de l'électrode. Les moyens formant pince peuvent comporter deux doigts formant levier montés en rotation au niveau de leur partie médiane dans deux lumières diamétralement opposées du corps tubulaire de la deuxième partie, les doigts comportant des extrémités libres destinées à pincer l'électrode, lesdits doigts comportant une portion d'actionnement faisant saillie du corps tubulaire de la deuxième partie.

La partie mobile comporte avantageusement des moyens pour régler la longueur de pénétration de l'électrode dans la deuxième partie.

Par exemple, la deuxième partie comporte une extrémité longitudinale ouverte pour l'introduction du support d'outil et une deuxième extrémité longitudinale fermée, les moyens de réglage comportant une vis montée dans la deuxième extrémité longitudinale fermée et débouchant à l'intérieur de la deuxième partie, ladite vis étant alignée avec l'axe de l'électrode, l'extrémité de la vis située dans la deuxième partie étant destinée à venir en contact avec l'extrémité libre de l'électrode formant une butée pour celle-ci.

Le dispositif de changement d'électrode selon l'invention est avantageusement utilisé pour les dispositifs de soudage des bouchons sur la gaine de crayons de combustible nucléaire et/ou pour les dispositifs de queusotage des bouchons de crayon de combustible nucléaire.

La présente invention a également pour objet un procédé de retrait d'électrode d'un outil porte-électrode au moyen du dispositif selon la présente invention, comportant, après une étape de retrait de l'outil porte-électrode du dispositif de soudage, les étapes :
a) introduction de l'outil porte-électrode dans le support d'outil, la deuxième partie étant montée sur le support d'outil, l'extrémité libre de l'électrode traversant le support d'outil et débouchant dans la deuxième partie,
b) immobilisation en translation et en rotation de l'outil porte-électrode dans le support d'outil,
c) desserrage du mandrin au moyen de la deuxième partie,
d) solidarisation de l'électrode et de la deuxième partie,
e) séparation par translation du support d'outil et de la deuxième partie, l'électrode partant avec la deuxième partie.

L'étape b) peut être obtenue par vissage de l'outil porte-électrode dans le support d'outil. L'étape d) peut être obtenue par pincement de l'électrode par rapprochement des doigts.

Le procédé de retrait selon l'invention peut comporter l'étape de retrait de l'électrode de la deuxième partie, en relâchant le pincement l'électrode tombant par gravité.

La présente invention a également pour objet un procédé de montage d'électrode dans un outil porte-électrode au moyen du dispositif selon la présente invention, comportant, après une étape de retrait de l'outil porte-électrode du dispositif de soudage, les étapes :
a') introduction de l'outil porte-électrode dans le support d'outil, le mandrin traversant le support d'outil,
b') immobilisation en translation et en rotation de l'outil porte-électrode dans le support d'outil,
c') mise en place d'une électrode dans la deuxième partie et immobilisation de celle-ci dans la deuxième partie par l'extrémité de soudage de l'électrode,
d') assemblage du support d'outil et de la deuxième partie par translation et rapprochement, l'extrémité laissée libre de l'électrode pénétrant dans le mandrin,
e') désolidarisation de l'électrode et de la deuxième partie,
f') serrage du mandrin.

L'étape b') peut être obtenue par vissage de l'outil porte-électrode dans le support d'outil.

L'étape c') peut être obtenue par pincement de l'électrode par rapprochement des doigts.

L'étape e') peut être obtenue par relâchement du pincement de l'électrode par les doigts.

### BRÈVE DESCRIPTION DES DESSINS

La présente invention sera mieux comprise à l'aide de la description qui va suivre et des dessins annexés sur lesquels :
- la figure 1 est une vue de côté d'un exemple de réalisation du dispositif de changement d'électrode selon la présente invention, dans lequel le porte-électrode est monté,
- la figure 2 est une vue en coupe longitudinale du dispositif de la figure 1,
- la figure 3 est une vue de devant du dispositif de la figure 1,
- la figure 4 est une vue en perspective du dispositif de la figure 1,
- les figures 5A à 5F sont des vues de détail de la partie mobile du dispositif de la figure 1,
- la figure 6 est une vue en coupe longitudinale du support fixe du dispositif de la figure 1.

### EXPOSÉ DÉTAILLÉ DE MODES DE RÉALISATION PARTICULIERS

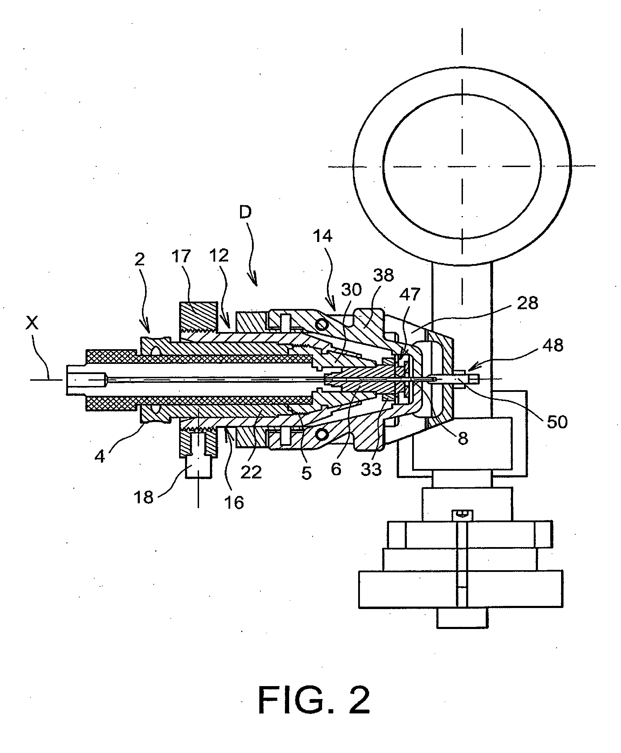

Sur la figure 2, on peut voir en coupe un outil porte-électrode 2 d'axe X destiné à porter une électrode de soudage, cet outil étant monté lui-même dans un dispositif de soudage (non représenté).

L'outil porte-électrode 2 est représenté monté dans le dispositif selon l'invention.

L'outil porte-électrode 2 comporte un corps 4 et un mandrin 6 monté dans le corps 4, le mandrin 6 étant destiné à maintenir par serrage l'électrode 8.

Le corps 4 comporte, sur sa périphérie extérieure, une zone filetée 5 pour sa fixation dans le dispositif de soudage.

Le mandrin 6, monté dans un alésage du corps 4, comporte à son extrémité libre 6.1 un élément pour permettre le desserrage et le serrage de l'électrode 8, cet élément peut être par exemple à section hexagonale ou carrée. L'électrode 8 est coaxiale à l'axe X.

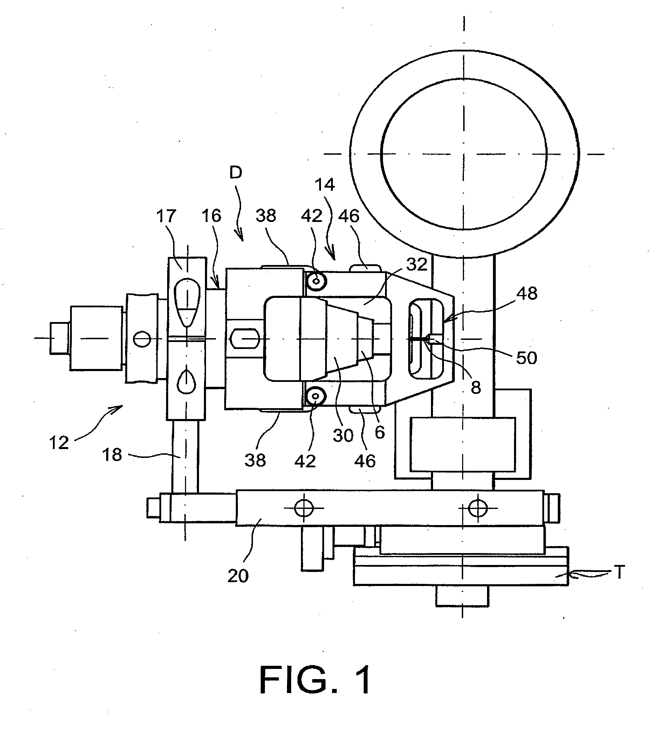

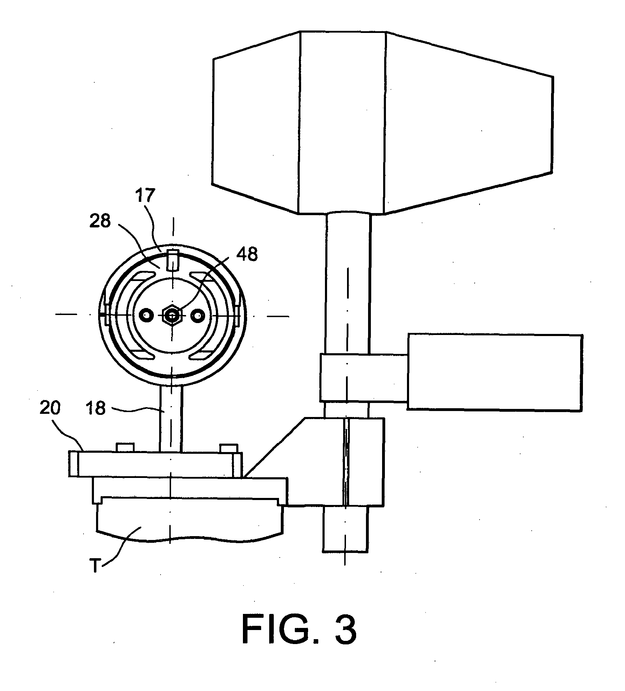

Sur les figures 1 à 4, on peut voir un exemple de réalisation d'un dispositif de changement d'électrode D selon la présente invention.

Le dispositif de changement d'électrode comporte une partie fixe 12 destinée à être fixée sur un plan de travail T, par exemple sur une table où est disposé le dispositif de soudage, et une partie mobile 14 destinée à manipuler les électrodes.

La partie fixe 12 comporte un support d'outil 16 destiné à loger l'outil porte-électrode 2.

Le support d'outil 16 est, dans l'exemple représenté, monté dans une bague 17 supportée par une tige 18 munie d'un pied 20 fixé sur le plan de travail.

Le pied 20, dans l'exemple représenté, est vissé sur le plan de travail.

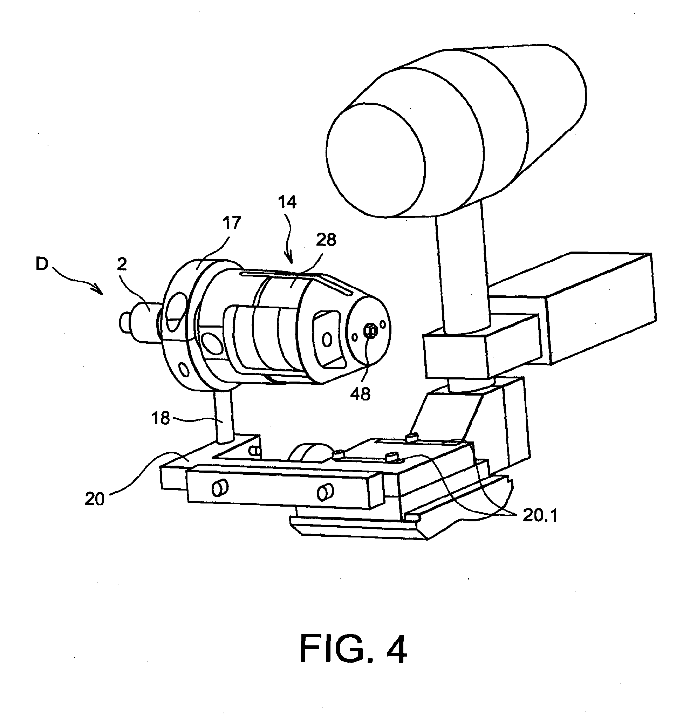

Avantageusement, il comporte deux rainures 20.1 parallèles pour le passage des vis et pour permettre un ajustement du positionnement du pied par rapport au plan de travail, comme on peut le voir sur la figure 4.

Le support d'outil 16 comporte un corps tubulaire 22 ménageant un logement d'axe X1 de forme correspondante à celui de l'outil porte-électrode 2. Le logement 22 est ouvert à ses deux extrémités. Lorsque l'outil porte-électrode 2 est monté dans le support d'outil 16, les axes X et X1 sont confondus.

Dans l'exemple représenté, l'outil porte-électrode comporte une portion cylindrique à section circulaire et une portion tronconique.
Le logement 22 comporte également une portion à section circulaire 22.1 et une portion à section tronconique 22.2 correspondantes.

Le corps, dans l'exemple représenté, comporte une portion de plus grand diamètre extérieur 24 montée dans la bague 17. Le corps est, par exemple maintenu dans la bague 17 par serrage, la bague 17 étant formée de deux arcs de cercle reliés l'un à l'autre aux deux extrémités par des vis vissées directement dans l'un des arcs de cercle.

La surface intérieure du corps 22 comporte une portion taraudée 26 destinée à coopérer avec la portion filetée 5 du corps de l'outil porte-électrode 4. La longueur de logement du support d'outil 16 est telle que, lorsque l'outil porte-électrode 2 est disposé dans le logement, l'outil dépasse au niveau de ses deux extrémités.

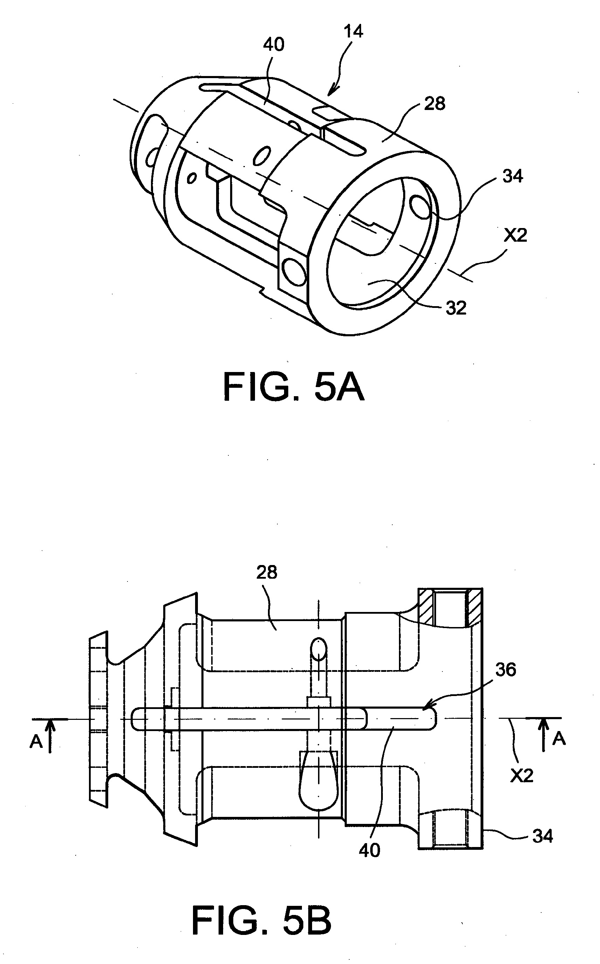

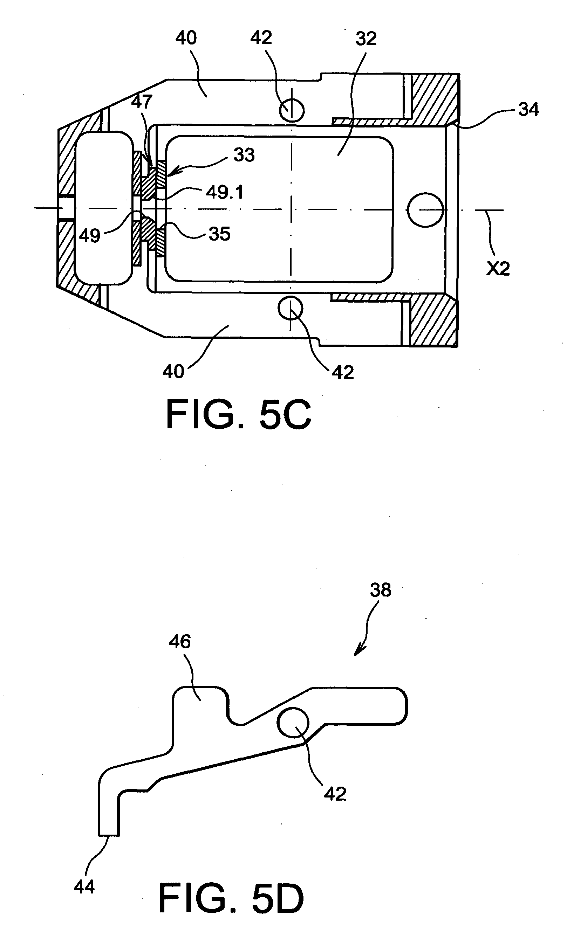

La partie mobile 14 comporte un corps formant capot destinée à recouvrir l'extrémité 30 du support d'outil 16 par laquelle sort l'électrode, comme on peut le voir sur les figures 1 et 2. La partie mobile 14 est visible seule sur les figures 5A à 5C.

Le capot 28 définit donc un logement 32 d'axe X2 destiné à recevoir l'extrémité 30 du support d'outil 16, le mandrin et l'extrémité libre de l'électrode 8. Lorsque le capot 28 est monté sur le support d'outil 16, les axes X, X1 et X2 sont coaxiaux.

Le logement 32 comporte une ouverture longitudinale 34 par laquelle le support d'outil 16 pénètre dans le logement 32, cette ouverture 34 ayant un diamètre sensiblement égal au diamètre extérieur de la portion circulaire du corps du support d'outil. Ainsi, lors de la mise en place du capot 28 sur le support 16, le capot 28 est monté sur le support 16 sensiblement sans jeu.

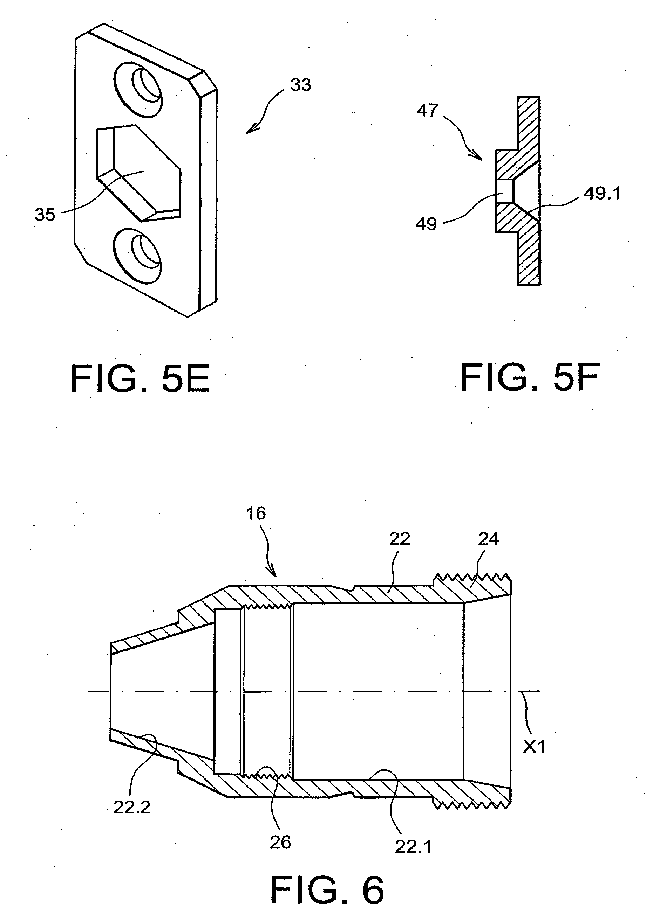

La partie mobile 14 comporte également des moyens 33 pour desserrer ou serrer le mandrin. Ces moyens sont formés, dans l'exemple représenté, par une bride représentée seule sur la figure 5E et comportant une plaquette munie d'une empreinte 35 à profil correspondant à celui de l'élément 10 de l'outil porte-électrode 2, le profil est hexagonal dans l'exemple représenté. La bride 33 est disposée dans le logement de sorte que, lorsque le capot 28 est mis en place sur le support d'outil 16, le mandrin se loge dans l'empreinte 35. Sur la figure, on peut voir le mandrin 6 dans l'empreinte 35.

La partie mobile 14 comporte également des moyens 36 formant pince pour saisir l'électrode à retirer de l'outil porte-électrode 2 ou à mettre en place sur l'outil porte-électrode 2.

Dans l'exemple représenté, la pince 36 comporte deux doigts 38 montés pivotant dans le capot 28.

Sur la figure 5D, on peut voir un doigt 38 représenté seul.

Le capot 28 comporte deux lumières allongées 40 diamétralement opposées, s'étendant selon l'axe longitudinal X2.

Dans chaque lumière 40, est monté un doigt 38 pivotant autour d'un axe 42. L'axe 42 est orthogonal à l'axe X2. L'axe 42 est situé sensiblement au centre des doigts 38.

Chaque doigt 38 forme un levier pivotant autour de l'axe 42.

Le doigt 38 comporte une extrémité 44 destinée à venir en contact avec l'électrode et à exercer un effort de serrage sur l'électrode 8 en coopération avec l'autre doigt 38.

Le doigt 38 comporte entre l'axe 42 et l'extrémité 44 une portion d'actionnement 46 faisant saillie latéralement pour faire pivoter le doigt 38 dans un sens de serrage de l'électrode.

La partie d'actionnement 46 fait saillie de la surface du capot 28 pour permettre son accès par l'opérateur qui va appliquer un effort sur les éléments 46 des deux doigts 38 simultanément pour provoquer le pincement de l'électrode 8.

Des ressorts de rappel sont également prévus au niveau des doigts 38, servant à maintenir les doigts écartés, i.e. maintenir la pince ouverte en l'absence d'action sur les doigts, la pince étant fermée grâce aux efforts exercés par l'opérateur.

La partie mobile 14 comporte également, en amont de la zone de serrage de l'électrode, des moyens de guidage 47 de l'extrémité libre de l'électrode. Ces moyens de guidage sont formés par une plaquette représentée en coupe longitudinale sur la figure 5F, munie d'un passage 49 destiné à être traversé par l'électrode 8, le diamètre de ce passage est sensiblement celui de l'électrode 8. De manière avantageuse, l'entrée du passage est bordée par un chanfrein 49.1 orienté dans le sens de pénétration de l'électrode, améliorant le guidage de l'électrode.

La partie mobile 14 comporte également des moyens 48 pour ajuster la position longitudinale de l'électrode 8, notamment lors d'une étape de mise en place d'une nouvelle électrode pour assurer que la longueur d'électrode dépassant de l'outil porte-électrode 2 soit constante.

Les moyens d'ajustement 48 comportent une vis de réglage 50 vissée dans un alésage traversant pratiqué dans l'extrémité fermée du capot 28, l'alésage étant d'axe X2. Ainsi, suivant la profondeur de vissage de la vis de réglage 50, l'enfoncement de l'électrode 8 dans le capot 28 est modifié.

Nous allons maintenant expliquer l'utilisation du dispositif de changement d'électrode selon l'invention. Généralement, lorsque l'opérateur retire une électrode usée, il la remplace immédiatement.

En situation de non utilisation, la partie mobile 14 du dispositif de changement d'électrode D est montée sur la partie fixe 12 du dispositif de changement d'électrode D en attente d'utilisation, plus particulièrement le capot 28 est monté sur le support d'outil 16.

Lorsque l'opérateur veut remplacer une électrode 8, il retire l'outil porte-électrode 2 du dispositif de soudage, et monte celui-ci dans le support d'outil 16. Pour cela, il fait pénétrer le corps de l'outil porte-électrode 2 et visse celui-ci dans le support d'outil 16. L'outil porte-électrode 2 est alors immobilisé dans le support d'outil 16.

Lors de la mise en place de l'outil porte-électrode 2 dans le support d'outil 16, l'électrode 8 pénètre dans le passage 35 de la plaquette de guidage du capot et l'élément à section hexagonale du mandrin se loge dans la bride de mandrin 33.

L'opérateur fait alors pivoter le capot 28 par rapport au support d'outil 16 autour de l'axe X, ce qui provoque la rotation de l'écrou 10 via la rotation de la plaquette 33, et le desserrage de l'électrode 8.

L'opérateur appuie ensuite simultanément sur les deux éléments d'actionnement 46, ce qui provoque le pivotement des doigts autour des axes 42 et le serrage de l'électrode 8. L'opérateur déplace ensuite longitudinalement le partie mobile 14 pour la retirer du support d'outil 16 tout en maintenant ses efforts sur les doigts, l'électrode 8 est immobilisée dans la partie mobile 14 et est emportée avec elle.

L'opérateur saisit ensuite l'électrode 8 par son extrémité de serrage qui ne présente pas de risque pour les gants, relâche ses efforts sur les doigts 38, retire l'électrode 8 de la partie mobile 14 et la jette dans un récipient adapté.

Pour replacer une électrode 8 dans l'outil porte-électrode 2, il effectue les opérations inverses.

Pour cela, il prend une électrode neuve par son extrémité de serrage, d'ailleurs seule cette extrémité est accessible lorsque les électrodes neuves sont dans leur étui.

Ensuite, l'opérateur enfonce l'électrode 8 par son extrémité libre dans la partie mobile 14 jusqu'à qu'elle vienne en butée contre la vis de réglage 50. Il sait alors que l'électrode 8 est bien en place.

Il exerce ensuite un effort sur les deux éléments d'actionnement des doigts 38 pour serrer l'électrode neuve 8.

Il remet en place la partie mobile 14 sur le support d'outil 16 en guidant l'extrémité de soudage de l'électrode 8 dans le mandrin 6. Il relâche ses efforts sur les doigts 38, l'électrode 8 n'est plus maintenue par les doigts 38.

L'opérateur fait alors pivoter le capot 28 dans le sens de serrage du mandrin 6, l'électrode 8 est alors serrée dans le mandrin 6.

Il dévisse ensuite l'outil porte-électrode 2 pour le libérer du support d'outil 16 et peut le remettre en place dans le dispositif de soudage.

Le dispositif de changement d'électrode selon la présente invention offre une barrière de protection entre l'extrémité pointue de l'électrode et l'opérateur. Le seul moment où cette extrémité est visible est lorsque l'opérateur retire l'électrode du capot ou met une électrode en place dans le capot.

Or, lors des ces étapes, l'opérateur n'a pas à toucher cette extrémité et il ne fait pas de manipulation complexe et laborieuse, son attention peut alors se porter sur cette extrémité. Les risques de blessure sont donc réduits.

En outre, le réglage de la longueur de l'électrode faisant saillie du porte-électrode est très simple. Pour cela, il suffit de visser ou dévisser la vis de réglage afin de modifier la profondeur d'introduction de l'électrode dans le capot. Lors de la mise en place d'une électrode dans le capot, l'opérateur introduit l'extrémité de soudage de l'électrode jusqu'à venir en butée contre la vis de réglage, il est alors sûr que la longueur de l'électrode sera correcte.

Le dispositif de changement d'électrode selon la présente invention est particulièrement adapté à une utilisation en espaces confinés, plus particulièrement en boîtes à gant.

Mais il est bien entendu que la présente invention s'applique à tout dispositif de soudage quel qu'il soit, et non uniquement à des dispositifs de soudage en milieu confiné.

La forme des différentes pièces des outils n'est en aucun limitative et peut être modifiée en fonction, notamment, de la forme de l'outil porte-électrode concerné.

## Revendications

1. Dispositif de retrait d'une électrode (8) d'un mandrin (6) d'un outil porte-électrode (2) et/ou de montage d'une électrode dans un mandrin (6) d'un outil porte-électrode (2), ledit outil porte-électrode (2) faisant partie d'un dispositif de soudage, ledit outil porte-électrode étant retiré du dispositif de soudage avant le retrait de l'électrode ou le montage de l'électrode, ledit dispositif comportant une première partie (12) destinée à loger l'outil porte-électrode (2), ladite électrode (8) faisant saillie au moins en partie à l'extérieur de ladite première partie (12), ladite première partie (12) comportant des moyens pour immobiliser en translation et en rotation l'outil porte-électrode (2) et une deuxième partie (14) destinée à recouvrir la partie de l'électrode (8) faisant saillie à l'extérieur de la première partie (12), la deuxième partie (14) étant séparable de la première partie (12) par translation le long de l'électrode (8), la deuxième partie (14) comportant des moyens (33) pour serrer ou desserrer le mandrin (6) de l'outil porte-électrode (2) et des moyens (36) pour rendre solidaire l'électrode (8) de la deuxième partie (14) pour permettre son retrait du mandrin (6) lors de la séparation de la première (12) et de la deuxième (14) partie, ou l'amenée de l'électrode (8) lors de l'assemblage de la première (12) et de la deuxième (14) partie, **caractérisé en ce que** ladite deuxième partie (14) est montée autour de la première partie (12) et est mobile en rotation par rapport à la première partie (12) lorsqu'elle l'entoure, ladite deuxième partie (14) étant montée autour de la première partie (12) de sorte que, lorsque l'outil porte-électrode est mis en place dans la première partie (12), l'électrode (8) pénètre dans les moyens pour rendre solidaire l'électrode de la deuxième partie (14) et le mandrin (6) pénètre dans les moyens pour serrer ou desserrer le mandrin.

2. Dispositif de retrait d'une électrode et/ou de montage d'une électrode selon la revendication 1, dans lequel les moyens pour immobiliser en translation et en rotation l'outil porte-électrode sont formés par un taraudage coopérant avec un filetage (5) réalisé sur l'outil porte-électrode (2).

3. Dispositif de retrait d'une électrode et/ou de montage d'une électrode selon la revendication 1 ou 2, dans lequel la première partie (12) comporte un corps tubulaire (16) formant un support d'outil et la deuxième partie (14) comporte un capot tubulaire (28) entourant le support d'outil (16) et apte à pivoter autour de celui-ci, et dans lequel les moyens (33) pour serrer ou desserrer le mandrin (6) comportent une empreinte (35) de forme correspondante à celle de l'élément de serrage et de desserrage du mandrin (6).

4. Dispositif de retrait d'une électrode et/ou de montage d'une électrode selon l'une des revendications 1 à 3, dans lequel les moyens (36) pour rendre solidaire l'électrode (8) de la deuxième partie (14) sont des moyens formant pince d'une extrémité de soudage de l'électrode (8), lesdits les moyens (36) formant pince comportant deux doigts (38) formant levier montés en rotation au niveau de leur partie médiane dans deux lumières (40) diamétralement opposées du capot tubulaire (28) de la deuxième partie, les doigts (38) comportant des extrémités libres destinées à pincer l'électrode (8), lesdits doigts (38) comportant une portion d' actionnement faisant saillie du corps tubulaire de la deuxième partie.

5. Dispositif de retrait d'une électrode et/ou de montage d'une électrode selon l'une des revendications 1 à 4, dans lequel la deuxième partie comporte des moyens (48) pour régler la longueur de pénétration de l'électrode (8) dans la deuxième partie (14).

6. Dispositif de retrait d'une électrode et/ou de montage d'une électrode selon la revendication 5, dans lequel la deuxième partie (14) comporte une extrémité longitudinale ouverte (34) pour l'introduction du support d'outil (16) et une deuxième extrémité longitudinale fermée, les moyens de réglage (48) comportant une vis de réglage (50) montée dans la deuxième extrémité longitudinale fermée et débouchant à l'intérieur du capot tubulaire (28), ladite vis de réglage (50) étant alignée avec l'axe de l'électrode (8), l'extrémité de la vis située dans le capot tubulaire (28) étant destinée à venir en contact avec l'extrémité libre de l'électrode (8) formant une butée pour celle-ci.

7. Dispositif de retrait d'une électrode et/ou de montage d'une électrode selon l'une des revendications 1 à 6, pour les dispositifs de soudage des bouchons sur la gaine de crayons de combustible nucléaire et/ou pour les dispositifs de queusotage des bouchons de crayon de combustible nucléaire.

8. Procédé de retrait d'électrode d' un outil porte-électrode au moyen du dispositif selon l'une des revendications précédentes, comportant après une étape de retrait de l'outil porte-électrode du dispositif de soudage, les étapes :
a) introduction de l'outil porte électrode (2) dans le support d'outil (16), la deuxième partie (14) étant montée sur le support d'outil (16), l'extrémité libre de l'électrode (8) traversant le support d'outil (16) et débouchant dans la deuxième partie,
b) immobilisation en translation et en rotation de l'outil porte-électrode (2) dans le support d'outil (16),
c) desserrage du mandrin (6) au moyen de la deuxième partie (14),
d) solidarisation de l'électrode (8) et de la deuxième partie (14),
e) séparation par translation du support d' outil (16) et de la deuxième partie, l'électrode (8) partant avec la deuxième partie (14).

9. Procédé de retrait d'électrode d'un outil porte-électrode selon la revendication 8, l'étape b) étant obtenue par vissage de l'outil porte-électrode dans le support d'outil.

10. Procédé de retrait d'électrode d'un outil porte-électrode selon la revendication 8 ou 9, l'étape d) étant obtenue par pincement de l'électrode par rapprochement des doigts.

11. Procédé de retrait d'électrode d'un outil porte-électrode selon l'une des revendication 8 à 10, comportant l'étape de retrait de l'électrode de la deuxième partie, en relâchant le pincement l'électrode tombant par gravité.

12. Procédé de mise en place d'électrode dans outil porte-électrode au moyen du dispositif selon l'une des revendications 1 à 7, comportant après une étape de retrait de l'outil porte-électrode du dispositif de soudage, les étapes :
a') introduction de l'outil porte-électrode (2) dans le support d'outil (16), le mandrin (6) traversant le support d'outil (16),
b') immobilisation en translation et en rotation de l'outil porte-électrode (2) dans le support d'outil (16),
c') mise en place d'une électrode (8) dans la deuxième partie (14) et immobilisation de celle-ci dans la deuxième partie (14) par l'extrémité de soudage de l'électrode (8),
d') assemblage du support d'outil (16) et de la deuxième partie (14) par translation et rapprochement, l'extrémité laissée libre de l'électrode (8) pénétrant dans le mandrin (6),
e') désolidarisation de l'électrode (8) et de la deuxième partie (14),
f') serrage du mandrin (6).

13. Procédé de mise en place d'électrode dans outil porte-électrode selon la revendication 12, l'étape b') étant obtenue par vissage de l'outil porte-électrode dans le support d'outil.

14. Procédé de mise en place d'électrode dans outil porte-électrode selon la revendication 12 ou 13, l'étape c') étant obtenue par pincement de l'électrode par rapprochement des doigts.

15. Procédé de mise en place d'électrode dans outil porte-électrode selon l'une des revendication 12 à 15, l'étape e') étant obtenue par relâchement du pincement de l'électrode par les doigts.

## Patentansprüche

1. Vorrichtung zum Zurückziehen einer Elektrode (8) von einem Spannfutter (6) eines Elektrodenträgerwerkzeugs (2) und/oder zur Montage einer Elektrode in einem Spannfutter (6) eines Elektrodenträgerwerkzeugs (2), welches Elektrodenträgerwerkzeug (2) Teil einer Schweißvorrichtung ist, wobei das Elektrodenträgerwerkzeug von der Schweißvorrichtung vor dem Zurückziehen der Elektrode oder der Montage der Elektrode zurückgezogen wird, wobei die Vorrichtung ein erstes Teil (12) umfasst, das dazu ausgelegt ist, das Elektrodenträgerwerkzeug (2) aufzunehmen, wobei die Elektrode (8) wenigstens teilweise an der Außenseite des ersten Teils (12) vorsteht, wobei das erste Teil (12) Mittel zum translatorischen und rotatorischen Immobilisieren des Elektrodenträgerwerkzeugs (2) umfasst, und ein zweites Teil (14) dazu ausgelegt ist, den Teil der Elektrode (8) zu bedecken, der an der Außenseite des ersten Teils (12) vorsteht, wobei das zweite Teil (14) durch Translation entlang der Elektrode (8) von dem ersten Teil (12) separierbar ist, wobei das zweite Teil (14) Mittel (33) zum Spannen oder Entspannen des Spannfutters (6) des Elektrodenträgerwerkzeugs (2) und Mittel (36) umfasst, um die Elektrode (8) mit dem zweiten Teil (14) zu verbinden, um ihren Rückzug aus dem Spannfutter (6) während der Separierung des ersten (12) und des zweiten (14) Teils zu ermöglichen, oder die Zuführung der Elektrode (8) während des Zusammenfügens des ersten (12) und des zweiten (14) Teils, **dadurch gekennzeichnet, dass** das zweite Teil (14) um das erste Teil (12) herum montiert ist und bezüglich des ersten Teils (12) drehbeweglich ist, wenn es dieses umgibt, wobei das zweite Teil (14) derart um das erste Teil (12) herum montiert ist, dass dann, wenn das Elektrodenträgerwerkzeug in dem ersten Teil (12) platziert ist, die Elektrode (8) in die Mittel zum Verbinden der Elektrode mit dem zweiten Teil (14) eindringt, und das Spannfutter (6) in die Mittel zum Spannen oder Entspannen des Spannfutters eindringt.

2. Vorrichtung zum Zurückziehen einer Elektrode und/oder zur Montage einer Elektrode nach Anspruch 1, bei der die Mittel zum translatorischen und rotatorischen Immobilisieren des Elektrodenträgerwerkzeugs durch eine Gewindebohrung gebildet sind, die mit einem Gewinde (5) zusammenwirkt, das an dem Elektrodenträgerwerkzeug (2) realisiert ist.

3. Vorrichtung zum Zurückziehen einer Elektrode und/oder zum Montieren einer Elektrode nach Anspruch 1 oder 2, bei der das erste Teil (12) einen röhrenförmigen Körper (16) umfasst, der einen Werkzeugträger bildet, und das zweite Teil (14) eine röhrenförmige Kappe (28) umfasst, die den Werkzeugträger (16) umgibt und dazu ausgelegt ist, um diesen herum zu schwenken, und bei der die Mittel (33) zum Spannen oder Entspannen des Spannfutters (6) eine Vertiefung (35) mit einer Form entsprechend jener des Elements zum Spannen und zum Entspannen des Spannfutters (6) umfassen.

4. Vorrichtung zum Zurückziehen einer Elektrode und/oder zum Montieren einer Elektrode nach einem der Ansprüche 1 bis 3, bei der die Mittel (36) zum Verbinden der Elektrode (8) mit dem zweiten Teil (14) Mittel sind, die eine Klemme eines Schweißendes der Elektrode (8) bilden, wobei die klemmenbildenden Mittel (36) zwei Finger (38) umfassen, die einen Hebel bilden und drehbar im Bereich ihres Mittelteils in zwei diametral entgegengesetzten Öffnungen (40) der röhrenförmigen Kappe (28) des zweiten Teils montiert sind, wobei die Finger (38) freie Enden umfassen, die dazu ausgelegt sind, die Elektrode (8) einzuklemmen, wobei die Finger (38) einen Betätigungsbereich umfassen, der aus dem röhrenförmigen Körper des zweiten Teils vorsteht.

5. Vorrichtung zum Zurückziehen einer Elektrode und/oder zum Montieren einer Elektrode nach einem der Ansprüche 1 bis 4, bei der das zweite Teil Mittel (48) zum Regeln der Eindringtiefe der Elektrode (8) in dem zweiten Teil (14) umfasst.

6. Vorrichtung zum Zurückziehen einer Elektrode und/oder zum Montieren einer Elektrode nach Anspruch 5, bei der das zweite Teil (14) ein offenes longitudinales Ende (34) zum Einführen des Werkzeugträgers (16) sowie ein zweites geschlossenes longitudinales Ende umfasst, wobei die Regelungsmittel (48) eine Regelungsschraube (50) umfassen, die in dem zweiten geschlossenen longitudinalen Ende montiert ist und in das Innere der röhrenförmigen Kappe (28) mündet, wobei die Regelungsschraube (50) mit der Achse der Elektrode (8) ausgerichtet ist, wobei das Ende der Schraube, das in der röhrenförmigen Kappe (28) gelegen ist, dazu ausgelegt ist, in Kontakt zu gelangen mit dem freien Ende der Elektrode (8), das einen Anschlag hierfür bildet.

7. Vorrichtung zum Zurückziehen einer Elektrode und/oder zum Montieren einer Elektrode nach einem der Ansprüche 1 bis 6 für Vorrichtungen zum Schweißen der Stopfen an der Ummantelung von Kernbrennstäben und/oder für Vorrichtungen zum Schweißen Drucksöffnungen von Stopfen von Kernbrennstäben.

8. Verfahren zum Zurückziehen einer Elektrode eines Elektrodenträgerwerkzeugs mit Hilfe der Vorrichtung nach einem der vorhergehenden Ansprüche, umfassend, nach einem Schritt des Zurückziehens des Elektrodenträgerwerkzeugs von der Schweißvorrichtung, die folgenden Schritte:
a) Einführen des Elektrodenträgerwerkzeugs (2) in den Werkzeugträger (16), wobei das zweite Teil (14) an dem Werkzeugträger (16) montiert wird, wobei das freie Ende der Elektrode (8) den Werkzeugträger (16) durchquert und in dem zweiten Teil mündet,
b) Translatorisches und rotatorisches Immobilisieren des Elektrodenträgerwerkzeugs (2) in dem Werkzeugträger (16),
c) Entspannen des Spannfutters (6) mit Hilfe des zweiten Teils (14),
d) Verbinden der Elektrode (8) und des zweiten Teils (14),
e) Separieren des Werkzeugträgers (16) und des zweiten Teils durch Translation, wobei die Elektrode (8) zusammen mit dem zweiten Teil (14) entfernt wird.

9. Verfahren zum Zurückziehen einer Elektrode eines Elektrodenträgerwerkzeugs nach Anspruch 8, wobei der Schritt b) durch Schrauben des Elektrodenträgerwerkzeugs in den Werkzeugträger erzielt wird.

10. Verfahren zum Zurückziehen einer Elektrode eines Elektrodenträgerwerkzeugs nach Anspruch 8 oder 9, wobei der Schritt d) durch Klemmen der Elektrode mittels Annäherung der Finger erzielt wird.

11. Verfahren zum Zurückziehen einer Elektrode eines Elektrodenträgerwerkzeugs nach einem der Ansprüche 8 bis 10, umfassend den Schritt des Zurückziehens der Elektrode von dem zweiten Teil durch Lösen der Einklemmung der Elektrode, die durch Schwerkraft fällt.

12. Verfahren zum Platzieren einer Elektrode in einem Elektrodenträgerwerkzeug mit Hilfe der Vorrichtung nach einem der Ansprüche 1 bis 7, umfassend, nach einem Schritt des Zurückziehens des Elektrodenträgerwerkzeugs von der Schweißvorrichtung, die folgenden Schritte:
a') Einführen des Elektrodenträgerwerkzeugs (2) in den Werkzeugträger (16), wobei das Spannfutter (6) den Werkzeugträger (16) durchquert,
b') Translatorisches und rotatorisches Immobilisieren des Elektrodenträgerwerkzeugs (2) in dem Werkzeugträger (16),
c') Platzieren einer Elektrode (8) in dem zweiten Teil (14) und Immobilisieren derselben in dem zweiten Teil (14) am Schweißende der Elektrode (8),
d') Zusammenfügen des Werkzeugträgers (16) und des zweiten Teils (14) durch Translation und Annäherung, wobei das freigelassene Ende der Elektrode (8) in das Spannfutter (6) eindringt,
e') Lösen der Verbindung der Elektrode (8) und des zweiten Teils (14),
f') Spannen des Spannfutters (6).

13. Verfahren zum Platzieren einer Elektrode in einem Elektrodenträgerwerkzeug nach Anspruch 12, wobei der Schritt b') durch Schrauben des Elektrodenträgerwerkzeugs in den Werkzeugträger erzielt wird.

14. Verfahren zum Platzieren einer Elektrode in einem Elektrodenträgerwerkzeug nach Anspruch 12 oder 13, wobei der Schritt c') durch Klemmen der Elektrode durch Annäherung der Finger erzielt wird.

15. Verfahren zum Platzieren einer Elektrode in einem Elektrodenträgerwerkzeug nach einem der Ansprüche 12 bis 15, wobei der Schritt e') durch Lösen des Einklemmens der Elektrode durch die Finger erzielt wird.

## Claims

1. A device for removing an electrode (8) from a mandrel (6) of an electrode-holder tool (2) and/or for installing an electrode in a mandrel (6) of an electrode-holder tool (2), said electrode-holder tool (2) forming part of a welding device, said electrode-holder tool being removed from the welding device before the electrode is removed or installed, said device comprising a first part (12) configured to house said electrode-holder tool (2), said electrode (8) protruding at least partly outside said first part (12), said first part (12) comprising means to stop the electrode-holder tool (2) in translation and in rotation, and a second part (14) configured to cover the part of the electrode (8) protruding outside the first part (12), the second part (14) being able to be separated from the first part (12) by sliding it along the electrode (8), the second part (14) comprising means (33) to tighten or untighten the mandrel (6) of the electrode-holder tool (2) and means (36) to attach the electrode (8) to the second part (14) to allow it to be removed from the mandrel (6) when the first (12) and second (14) parts are separated, or means to insert the electrode (8) when the first (12) and second (14) parts are installed, **characterized in that** said second part (14) is installed around the first part (12) and is able to rotate relative to the first part (14) when it surrounds it, said second part (14) being installed around the first part (12) such that, when the electrode-holder tool is put in place in the first part (12), the electrode (8) penetrates in the means for attaching the electrode of the second part (14) and the mandrel (6) penetrates in the means for tightening or untightening the mandrel.

2. A device for removing an electrode and/or for installing an electrode according to claim 1, in which the means to stop the electrode-holder tool in translation and in rotation of are formed by an internal thread cooperating with a thread (5) on the electrode-holder tool (2).

3. A device for removing an electrode and/or for installing an electrode according to claim 1 or 2, in which the first part (12) comprises a tubular body (16) forming a tool post and the second part (14) comprises a tubular cover (28) surrounding the tool post (16) and able to pivot around the latter, and in which the means (33) to tighten or untighten the mandrel (6) comprise a cavity (35) the shape of which matches that of the tightening or untightening element of the mandrel (6).

4. A device for removing an electrode and/or for installing an electrode according to one of the claims 1 to 3, in which the means (36) to attach the electrode (8) to the second part (14) are means forming a clamp of a welding end of the electrode (8), said means (36) forming a clamp comprising two fingers (38) forming a lever installed rotating in their median part in two diametrically opposite slots (40) of the tubular cover (28) of the second part, the fingers (38) comprising free ends configured to clamp the electrode (8), and said fingers (38) comprising an actuating portion protruding from the tubular body of the second part.

5. A device for removing an electrode and/or for installing an electrode according to one of the claims 1 to 4, in which the second part comprises means (48) to adjust the length of penetration of the electrode (8) in the second part (14).

6. A device for removing an electrode and/or for installing an electrode according to claim 5, in which the second part (14) comprises an open lengthways end (34) for introducing the tool post (16) and a second closed lengthways end, the adjustment means (48) comprising an adjusting screw (50) installed in the second closed lengthways end and emerging inside the tubular cover (28), said adjusting screw (50) being aligned with the axis of the electrode (8), and the end of the screw located in the tubular cover (28) being configured to come into contact with the free end of the electrode (8), forming a stop for the latter.

7. A device for removing an electrode and/or for installing an electrode according to one of the claims 1 to 6, for devices for welding end caps on the sheath of nuclear fuel rods and/or for devices for seal welding pressure holes in the end caps of nuclear fuel rods.

8. A method to remove an electrode from an electrode-holder tool using the device according to one of the previous claims comprising, after a step of removing the electrode-holder tool from the welding device, the following steps:
a) introduction of the electrode-holder tool (2) in the tool post (16), the second part (14) being installed on the tool post (16), the free end of the electrode (8) passing through the tool post (16) and emerges in the second part,
b) stopping the translation and the rotation of the electrode-holder tool (2) in the tool post (16),
c) untightening of the mandrel (6) using the second part (14),
d) attaching the electrode (8) to the second part (14),
e) separation by translating of the tool post (16) and the second part, the electrode (8) leaving with the second part (14).

9. A method of removing an electrode from an electrode-holder tool according to claim 8, step b) being obtained by screwing the electrode-holder tool into the tool post.

10. A method of removing an electrode from an electrode-holder tool according to claim 8 or 9, where step d) is obtained by clamping the electrode by bringing the fingers together.

11. A method of removing an electrode from an electrode-holder tool according to one of claims 8 to 10, comprising the step of removing the electrode from the second part by releasing the clamping the electrode falls under gravity.

12. A method to install an electrode in an electrode-holder tool using the device according to one of the claims 1 to 7, comprising, after a step of removing the electrode-holder tool from the welding device, the following steps:
a') introduction of the electrode-holder tool (2) in the tool post (16), where the mandrel (6) passes through the tool post (16),
b') stop of the translation and of the rotation of the electrode-holder tool (2) in the tool post (16),
c') installation of an electrode (8) in the second part (14) and immobilisation of it in the second part (14) by the welding end of the electrode (8),
d') installation of the tool post (16) and of the second part (14) by sliding and by bringing them together, where the remaining free end of the electrode (8) penetrates in the mandrel (6),
e') separation of the electrode (8) and the second part (14),
f') tightening of the mandrel (6).

13. A method of installing an electrode in an electrode-holder tool, where step b') is obtained by screwing the electrode-holder tool into the tool post.

14. A method of installing an electrode in an electrode-holder tool according to claim 12 or 13, step c') being obtained by clamping the electrode by bringing the fingers together.

15. A method of installing an electrode in an electrode-holder tool according to one of claims 12 to 15, step e') being obtained by releasing the clamping of the electrode by the fingers.
